# EUROPÄISCHE PATENTSCHRIFT

(11) **EP 0 776 414 B1**
(45) Veröffentlichungstag und Bekanntmachung des Hinweises auf die Patenterteilung: **18.07.2001**
(21) Anmeldenummer: 96917337.6
(22) Anmeldetag: 13.06.1996
(51) Int. Cl.: F02M 31/18, F02M 31/125, F02M 53/02, F02M 69/34

(54) **KRAFTSTOFFZUFÜHRVORRICHTUNG BEI EINEM VERBRENNUNGSMOTOR**
FUEL FEED DEVICE OF AN INTERNAL COMBUSTION ENGINE
DISPOSITIF D'AMENEE DE CARBURANT DANS UN MOTEUR A COMBUSTION INTERNE

(30) Priorität: 17.06.1995 DE 19522074
(43) Veröffentlichungstag der Anmeldung: 04.06.1997
(73) Patentinhaber: ROBERT BOSCH GMBH, 70442 Stuttgart (DE)
(72) Erfinder: KROHN, Klaus-Henning, D-96047 Bamberg (DE); HANS, Waldemar, D-96050 Bamberg (DE); LANGE, Jörg, D-71735 Eberdingen (DE); ABIDIN, Anwar, D-71229 Leonberg (DE); BETZEL, Thomas, D-71706 Markgröningen (DE); GRYTZ, Uwe, D-96050 Bamberg (DE); VIEWEG, Ulrich, D-90489 Nürnberg (DE); VOGEL, Christof, D-96120 Bischberg (DE); LIEBEMANN, Edwin, D-96050 Bamberg (DE)
(86) Internationale Anmeldenummer: DE9601034
(87) Internationale Veröffentlichungsnummer: WO9700379

(56) Entgegenhaltungen:
- EP-A- 0 509 982
- WO-A-95/08395
- WO-A-95/35441
- DE-A- 3 516 687
- DE-A- 4 412 448
- DE-C- 4 215 949
- US-A- 4 345 569
- PATENT ABSTRACTS OF JAPAN vol. 004, no. 080 (M-015), 10.Juni 1980 & JP,A,55 040230 (HITACHI LTD), 21.März 1980,

## Beschreibung

### Stand der Technik

Die Erfindung betrifft eine Kraftstoff zuführvorrichtung bei einem Verbrennungsmotor nach dem Oberbegriff des Anspruchs 1.

Aus der Schrift EP 0 509 982 A2, die den nächstliegenden Stand der Technik bildet, ist bereits eine Kraftstoff zuführvorrichtung bei einem Verbrennungsmotor bekannt, die eine Luftansaugeinrichtung mit Saugrohren, Kraftstoffeinspritzventile und mehrere Kaltstarteinrichtungen zur Verdampfung eines Kraftstoffs umfaßt. Die Kaltstarteinrichtung als Verdampferelement besteht dabei aus einem Kaltstartventil und einer Verdampfungskammer, in der ein Brennstoff-Luft-Gemisch verdampft wird, das über eine Strömungsverbindung wenigstens jeweils einem Saugrohr zugeführt wird. Dem luftumfaßten Kaltstartventil nachgeschaltet folgt die Verdampfungskammer, in die das zuvor gebildete Kraftstoff-Luft-Gemisch eintritt und von dort als erwärmtes Kraftstoffdampf-Luft-Gemisch über Verbindungskanäle weitergeleitet wird.

Das Leitungssystem besteht dabei aus einer Vielzahl von Verbindungskanälen, von denen jeder in jeweils ein Saugrohr mündet. Dabei mündet genau ein Verbindungskanal in genau ein Saugrohr. Das Kaltstartventil mit der Verdampfungskammer kann derart angeordnet sein, daß zwei Verbindungskanäle von der Verdampfungskammer ausgehend zu zwei Saugrohren verlaufen. Soll bei einer solchen Ausführung beispielsweise ein Vier-Zylinder-Motor mit Kraftstoff versorgt werden, sind zwangsläufig mindestens zwei "zentrale" Verdampfer (Verdampfungskammern) nötig.

Die in oben genannter Schrift offenbarten Kaltstarteinrichtungen zeichnen sich also dadurch aus, daß stets eine Zufuhr des Kraftstoffdampfes unmittelbar über genau einen Verbindungskanal in das jeweilige Saugrohr erfolgt. Entsprechend sind bei Mehrzylinder-Motoren immer mehrere zusätzliche Verdampfer nötig. Bei diesen Kaltstarteinrichtungen handelt es sich nicht um eine zentrale Verdampfungseinrichtung, mit der alle Brennkammern der Brennkraftmaschine versorgt werden sollen. Vielmehr werden mehrere als Kraftstoffverdampfer dienende Kaltstarteinrichtungen benötigt, um den pro Kraftstoffverdampfer erzeugten Kraftstoffdampf entweder einem oder zwei Saugrohren zuzuführen.

Eine bekannte Kraftstoffzuführvorrichtung (GB 2 248 087 A) dieser Art weist eine Luftansaugleitung mit einer darin angeordneten Drosselklappe auf, die in ein Sammelsaugrohr mündet, von dem zu den einzelnen Brennkammern des Verbrennungsmotors führende Saugrohre abzweigen. In der Nähe der Einlaßbereiche der einzelnen Brennkammern sind Einspritzventile angeordnet, mit denen Kraftstoff zur Bildung eines Kraftstoff-Luftgemischs in die jeweiligen Saugrohre eingespritzt wird. Ein Motorsteuergerät steuert die Kraftstoffeinspritzung in Abhängigkeit von der durch die Luftansaugleitung eingesaugten Luftmenge und anderen Motorbetriebsparametern.

Ferner beaufschlagt das Motorsteuergerät ein zentrales Einspritzventil mit einem zugeordneten Kraftstoffverdampfer, der stromaufwärts von der Drosselklappe an der Luftansaugleitung angeordnet ist, um der angesaugten Luft verdampften Kraftstoff zuzuführen.

Bei dieser bekannten Kraftstoffzuführvorrichtung erfolgt die Bildung des Kraftstoff-Luftgemischs während eines Leerlaufs- und Teillastbetriebs des Verbrennungsmotors mittels des zentralen Einspritzventils, während im Hochlastbetrieb ausschließlich die einzelnen Einspritzventile zur Kraftstoffzufuhr verwendet werden.

Dabei ist es problematisch, daß während der Warmlaufphase nach dem Starten des Verbrennungsmotors ein großer Teil des erzeugten Kraftstoffdampfes beim Ansaugen in kälteren Zonen des Verbrennungsmotor kondensiert und einen unerwünschten Wandfilm bildet, der zu einer Vergrößerung der Kohlenwasserstoffemissionen führt.

Bei einer anderen bekannten Kraftstoffzuführvorrichtung (DE 41 19 206 A1) ist in der Nähe des Einlaßbereiches jeder Brennkammer eines Verbrennungsmotors ein Einspritzventil vorgesehen, das zur Bildung eines Kraftstoff-Luftgemischs Kraftstoff in das jeweilige Saugrohr bzw. in den Einlaßbereich der Brennkammer einspritzt. Zusätzlich ist ein Luftzufuhrkanal mit einem darin angeordneten Steuerventil vorgesehen, der eingangsseitig mit einem stromaufwärts von einer Drosselklappe gelegenen Abschnitt eines Luftansaugrohr verbunden ist und der ausgangsseitig in den Kraftstoffaustrittsbereich des jeweiligen Einspritzventils mündet.

Durch den Luftzufuhrkanal läßt sich in der Warmlaufphase des Verbrennungsmotors Luft in den Kraftstoffaustrittsbereich des Einspritzventils blasen, um die Kraftstoffzerstäubung zu unterstützen. Die Luftzufuhr durch den Luftzufuhrkanal wird dabei von dem Steuerventil in Abhängigkeit von der Motordrehzahl, dem Ansaugunterdruck, der Motortemperatur und/oder anderen Motorbetriebsparametern gesteuert.

Mit einer derartigen Kraftstoffzuführvorrichtung ist es während der Warmlaufphase nach dem Starten, also bei kaltem Verbrennungsmotor kaum möglich, die Bildung eines für die Kohlenwasserstoffemissionen wesentlich mit verantwortlichen Wandfilms aus niedergeschlagenem Kraftstoff wirksam verhindern.

Dabei ist es besonders problematisch, daß bei kaltem Motor eine größere Kraftstoffmenge als bei warmem Motor zugeführt werden muß, um in der Brennkammer ein zündfähiges Kraftstoff-Luftgemisch mit einem bestimmten Anteil an dampfförmigen Kraftstoff zu erreichen, da sich ein Großteil des eingespritzten Kraftstoffs als Wandfilm niederschlägt, und so nicht zur Verbrennung beiträgt, sondern als überschüssiger Kohlenwasserstoff mit dem Abgas ausgestoßen wird. Hierdurch wird die Kohlenwasserstoffemission während der Warmlaufphase des Verbrennungsmotors in unerwünschter Weise erhöht.

### Vorteile der Erfindung

Die erfindungsgemäße Kraftstoffzuführvorrichtung gemäß Anspruch 1 hat demgegenüber den Vorteil, daß der mittels des Kraftstoffverdampfers erzeugte Kraftstoffdampf der von den Brennkammern angesaugten Luft so zuführbar ist, daß sich sein Weg zur jeweiligen Brennkammer verkürzt, wodurch eine Rückkondensation des Kraftstoffs und damit die Bildung eines Wandfilms weitgehend verhindert werden kann. Dabei läßt sich eine hohe Aufbereitungsgüte des der Brennkammer zugeführten Krafstoffs erhalten und die Kohlenwasserstoffemissionen werden bei kaltem Verbrennungsmotor innerhalb der ersten 80 s nach dem Starten des Motors während der Warmlaufphase wesentlich verringert.

Die Verteilerleitung ermöglicht eine gleichmäßige Verteilung des Kraftstoffdampfes auf alle Saugrohre gleichermaßen, wobei in vorteilhafter Weise diese Verteilerleitung nur vom Kraftstoffdampf eines einzigen Kraftstoffverdampfers gespeist wird. Auf diese Weise lässt sich konstruktiv einfach eine Mehrzylinder-Brennkraftmaschine mit Kraftstoffdampf in der Kaltstart- bzw. Warmlaufphase versorgen.

Durch die in den Unteransprüchen aufgeführten Maßnahmen sind vorteilhafte Weiterbildungen und Verbesserungen der im Anspruch 1 angegebenen Kraftstoffeinspritzvorrichtung möglich.

Besonders vorteilhaft ist es, wenn der im Kraftstoffverdampfer erzeugte Kraftstoffdampf über eine Kraftstoffdampfleitungsanordnung bis in den Einlaßbereich der Brennkammern geführt wird. Durch eine derartige separate Kraftstoffdampfleitungsanordnung kann eine Kondensation des verdampften Kraftstoffs weiter verringert werden, da die Kraftstoffdampfleitungsanordnung eine deutlich kleinere Oberfläche und ein kleineres Volumen aufweist. Durch die Verwendung von Rohren oder Schläuchen aus einem Material mit geringer Wärmeleitfähigkeit, insbesondere von Kunststoffrohren oder -schläuchen läßt sich die Kondensation von Kraftstoffdampf zusätzlich verringern.

Zweckmäßigerweise kann der Kraftstoffdampf durch die Volumenänderung beim Übergang in die Dampfphase aus dem Kraftstoffverdampfer ausgetrieben und kurz vor den Einlaßventilen den Brennkammern zugeführt werden. Dabei läßt sich das gleiche Druckgefälle wie bei der gleichzeitig vorhandenen Einzeleinspritzanlage erreichen, so daß die Kraftstoffzumessung während der Warmlaufphase unter Verwendung des Kraftstoffverdampfers mit der gleichen Genauigkeit durchführbar ist wie im Normalbetrieb bei warmen Verbrennungsmotor mit den Einzeleinspritzventilen.

Dabei kann die Zuführung unabhängig von der Luftzumessung, also unabhängig von der Drosselklappe und dem Leerlaufsteller durchgeführt werden, so daß sich eine optimale Gleichverteilung des Kraftstoffdampfes auf die Brennkammern zur weiteren Verbesserung der Abgaswerte erreichen läßt.

Bei einer anderen vorteilhaften Ausgestaltung der Erfindung ist der Kraftstoffverdampfer der Leerlaufluftleitung so zugeordnet, daß ihm ein Teil der angesaugten Luft zugeführt werden kann, um den Transport des verdampften Kraftstoffs zu unterstützen, eine Spülung des Kraftstoffverdampfers und der den Kraftstoffdampf führenden Leitungen mit Luft zu erzielen und das Kraftstoffaustragverhalten des Kraftstoffverdampfers zu verbessern. Auf diese Weise wird ein besonders einfacher Aufbau der erfindungsgemäßen Kraftstoffzuführvorrichtung erreicht.

### Zeichnung

Ausführungsbeispiele der Erfindung sind in der Zeichnung dargestellt und in der nachfolgenden Beschreibung näher erläutert. Es zeigen:
- Fig. 1: eine schematische Darstellung einer Kraftstoffzuführvorrichtung nach einem ersten Ausführungsbeispiel der Erfindung,
- Fig. 2: eine schematische Darstellung eines zweiten Ausführungsbeispiels der vorliegenden Erfindung,
- Fig. 3: eine schematische Darstellung eines Kraftstoffverdampfers für die Erfindung,
- Fig. 4: eine andere Ausgestaltung eines Kraftstoffverdampfers für die Erfindung,
- Fig. 5: eine weitere Ausgestaltung eines Kraftstoffverdampfers für die Erfindung, und
- Fig. 6: einen Schnitt im wesentlichen nach Linie VI-VI in Figur 5.

In den verschiedenen Figuren der Zeichnung sind einander entsprechende Bauteile mit gleichen Bezugszeichen versehen.

### Beschreibung der Ausführungsbeispiele

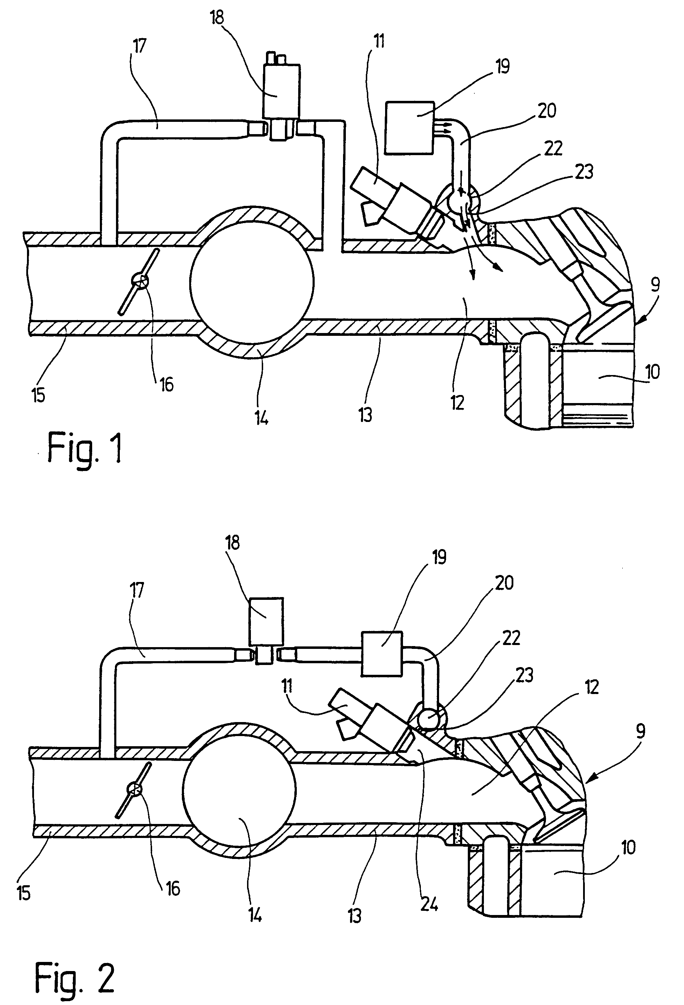

Figur 1 zeigt eine Kraftstoffzuführvorrichtung für einen Verbrennungsmotor 9, dessen Brennkammern 10 jeweils ein Einspritzventil 11 derart zugeordnet ist, daß dem Einspritzventil 11 zugeführter Kraftstoff in einen Einlaßbereich 12 eines zur Brennkammer 10 führenden Saugrohres 13 eingespritzt wird. Eingangsseitig sind die Saugrohre 13, von denen nur eines dargestellt ist, an ein Sammelsaugrohr 14 angeschlossen, das mit einem Luftansaugrohr 15 verbunden ist. Als Ansaugluftzumeßeinrichtung ist eine Drosselklappe 16 in dem Luftansaugrohr 15 angeordnet. Im Bereich der Drosselklappe 16 ist eine Leerlaufluftleitung 17 mit einer Leerlaufstelleinrichtung 18 vorgesehen.

Ein zentraler Kraftstoffverdampfer 19, der in nicht näher dargestellter Weise mit einer Kraftstoffzuführleitung verbunden ist, ist über eine Leitung 20 mit einer Verteilerleitung 22 verbunden, die sich über die Einspritzventile 11 erstreckt und jeweils über Austrittsöffnungen 23 nahe von Kraftstoffaustrittsbereichen 24 der Einspritzventile 11 in das entsprechende Saugrohr 13 mündet.

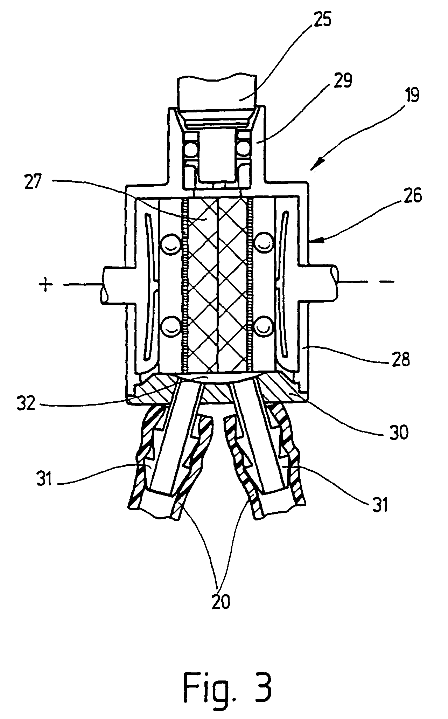

Der zentrale Kraftstoffverdampfer 19 besteht z. B., wie in Fig. 3 dargestellt, aus einem Einspritzventil 25 und einem Heizvorsatz 26, der als elektrisch beheizbare Verdampferstruktur 27 PTC- oder NTC-Elemente mit externer Regelung, also Widerstands-Heizelemente mit positiven bzw. negativen Temperaturkoeffizienten aufweist, die in einem Verdampfergehäuse 28 angeordnet sind. Bei PTC-Elementen erfolgt dabei Selbstregelung, die auch allein nutzbar ist. Die Heizelemente der Verdampferstruktur 27 können dabei plattenförmig oder porös sein. Das Verdampfergehäuse 28 weist eine Haltebuchse 29 für das Einspritzventil 25 und einen Anschlußdeckel 30 auf, der einen oder mehrere Anschlußstutzen 31 zum Anschluß einer Kraftstoffdampfleitungsanordnung.

Die Kraftstoffdampfleitungsanordnung umfaßt beispielsweise, wie in Fig. 1 dargestellt, eine Leitung 20 die zu einer Verteilerleitung 22 führt. Es können aber auch, wie in Fig. 3 dargestellt, zwei Leitungen 20 vorgesehen sein, die zu der Verteilerleitung 22 führen.

Die Kraftstoffdampfleitungsanordnung ist dabei derart gestaltet, daß jeder Brennkammer über einen möglichst kurzen Leitungsweg die gleiche Kraftstoffdampfmenge zugeführt wird, und besteht vorzugsweise aus Rohren oder Schläuchen, die aus einem Material mit geringer Wärmeleitfähigkeit, insbesondere aus Kunststoff, bestehen. Hierdurch läßt sich eine Rückkondensation von Kraftstoff in den zu den Brennkammern 10 führenden Leitungen 20, 22 vermeiden. Außerdem ist der Querschnitt der Rohre oder Schläuche so klein wie möglich zu wählen, so daß möglichst wenig Kraftstoffdampf in der Kraftstoffdampfleitungsanordnung verbleibt, sich jedoch kein die Zumeßfunktion beeinflussender Druck aufbauen kann.

Bei der beschriebenen Kraftstoffzuführvorrichtung wird zum Starten des Verbrennungsmotors und während der Start- und Warmlaufphase vom Einspritzventil 25 des Kraftstoffverdampfers 19 Kraftstoff in flüssiger Form der elektrisch beheizten Verdampferstruktur 27 zugemessen. Dort wird der flüssige Kraftstoff verdampft und durch die Volumenänderung beim Übergang in die Dampfphase aus dem Verdampfungsbereich des Kraftstoffverdampfers 19 ausgetrieben und über die Leitung 20 und die Verteilerleitung 22 kurz vor den Brennkammern 10 in den Einlaßbereich 12 der Saugrohre 13 geführt, um von dort zusammen mit der angesaugten Luft in die Brennkammern 10 zu gelangen.

Auf diese Weise lassen sich während der Start- und Warmlaufphase die Kohlenwasserstoffemissionen so stark senken, daß extrem niedrige Abgaswerte erreicht werden können, wie z. B. ULEV-Abgaswerte, also Abgaswerte für sogenannte "ultra low emission vehicles", da eine Kondensation des Kraftstoffdampfes an den Leitungswänden weitgehend verhindert werden kann.

Nach Abschluß der Warmlaufphase oder bei einem Kraftstoffmehrbedarf außerhalb des FTP-Zyklus, also bei scharfem Beschleunigen, bei Bergauffahrt oder dergleichen, wird auf Einzeleinspritzung mittels der den jeweiligen Brennkammern 10 zugeordneten Einspritzventile 11 umgeschaltet. Bei der Kraftstoffzuführung mittels der den Brennkammern 10 zugeordneten Einspritzventilen 11 ist die separate Verrohrung für die Kraftstoffdampfzuführung von Vorteil, da diese keinen Einfluß auf die Ansaugrohrdynamik hat.

Die Kraftstoffzuführvorrichtung nach Fig. 2 weist einen Kraftstoffverdampfer 19 auf, der mit der Leerlaufluftleitung 17 verbunden ist, wobei die Leerlaufstelleinrichtung 18 stromaufwärts vom Kraftstoffverdampfer 19 angeordnet ist.

Im dargestellten Beispiel mündet die Leitung 20, die während der Start- und Warmlaufphase Kraftstoffdampf oder ein Kraftstoffdampf-Luftgemisch und während des normalen Betriebs die gesamte Leerlaufluft oder nur einen Teilstrom davon führt in eine Verteilerleitung 22, die im wesentlichen in gleicher Weise angeordnet ist, wie in Fig. 1 gezeigt. Es ist aber auch möglich, eine sich an den Kraftstoffverdampfer 19 anschließende Leerlaufluftleitungsanordnung vorzusehen, deren einzelne Leitungen in nicht gezeigter Weise vom Kraftstoffverdampfer 19 zu den einzelnen Saugrohren 13 führen und dort im Bereich der Einspritzventile 11 in die Saugrohre 12 oder in die Kraftstoffaustrittsbereiche der Einspritzventile 11 münden.

Während der Warmlaufphase nach dem Starten des Verbrennungsmotors 9 arbeitet die anhand von Fig. 2 beschriebene Kraftstoffzuführvorrichtung ähnlich wie die Vorrichtung nach Fig. 1, um den für die Bildung eines geeigneten Kraftstoff-Luftgemischs erforderlichen Kraftstoffdampf bereitzustellen.

Die zur Bildung des Luftkraftstoffgemischs erforderliche Luft kann dabei über die Leerlaufluftleitung 17 infolge des Druckgefälles im Luftansaugrohr 15 über die Drosselklappe 16 dem Kraftstoffverdampfer 19 zugeführt werden, so daß die angesaugte Luft Kraftstoffdampf aus dem Kraftstoffverdampfer 19 mitnimmt. Die Luftmenge wird dabei über die Leerlaufstelleinrichtung 18 festgelegt, während die Kraftstoffmenge durch das als Kraftstoffzumeßeinrichtung dienende Einspritzventil 25 eingestellt wird. Während dieses Betriebs bleiben die Einspritzventile 11 inaktiv.

Andererseits ist es auch möglich, die Leerlauflufleitung 17 während der Warmlaufphase mittels der Leerlaufluftstelleinrichtung 18 abzusperren und den Kraftstoffaustrag aus dem Kraftstoffverdampfer 19 durch die Volumenänderung bei der Verdampfung zu bewirken.

Nach Beendigung der Warmlaufphase wird dann der Kraftstoffverdampfer 19 abgeschaltet und die weitere Kraftstoffzufuhr wird von den Einspritzventilen 11 übernommen. Die gemeinsame Verwendung des den Kraftstoff zumessenden Kraftstoffverdampfers 19 und der Leerlaufstelleinrichtung 18 ist hierbei besonders vorteilhaft, da sich auf diese Weise das Kraftstoff-Luftgemisch besonders genau einstellen läßt.

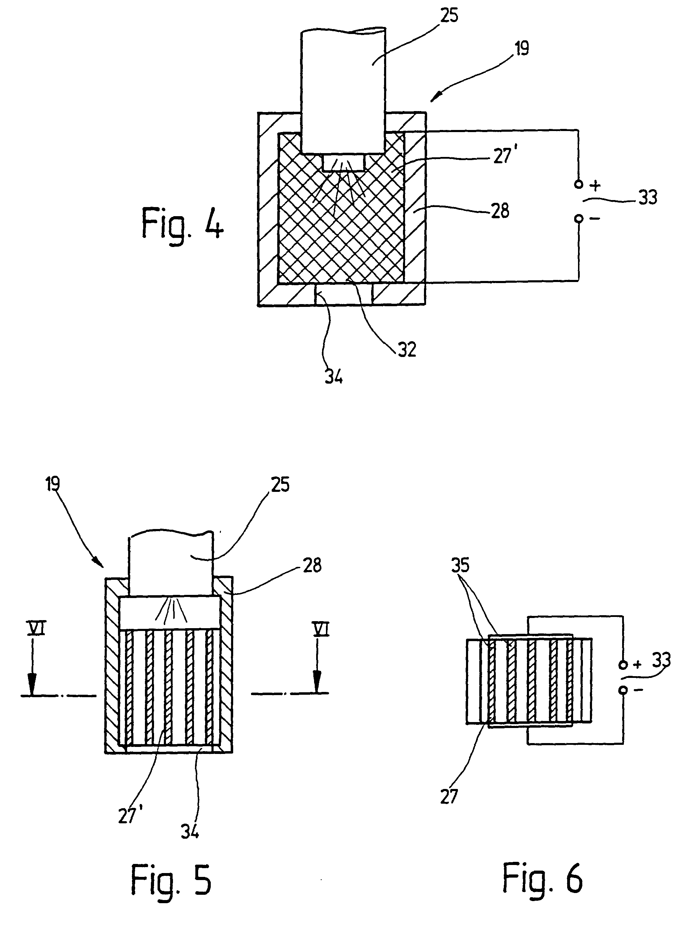

Figur 4 zeigt einen anderen Aufbau eines Kraftstoffverdampfers 19, bei dem in seinem Gehäuse 28 eine aus einem Material mit großer Oberfläche bestehende Verdampferstruktur 27' angeordnet ist, die zur elektrisch Beheizung mit einer Versorgungsspannungsquelle 33 verbunden ist und in die der Kraftstoff mittels des Einspritzventils 25 einspritzbar ist. Die große Oberfläche läßt sich z. B. durch enge Kanäle oder Kapillaren oder durch die Verwendung eines porösen Materials realisieren. Dabei ist auch die Verwendung von Whisker- oder Sintermaterial möglich. Eine dem Auslaßbereich 32 des Gehäuses 28 zugeordnete Auslaßöffnung 34 ist dabei in nicht näher dargestellter Weise an die Leitung 20 angeschlossen. Zweckmäßigerweise wird dabei die Luft in der Weise geführt, daß diese den Kraftstoffdampfaustrag aus der Verdampferstruktur 27' durch den Venturi-Effekt unterstützt.

Figur 5 und 6 zeigen eine plattenförmige Verdampferstruktur 27, die ähnlich der nach Fig. 3 aus einzelnen elektrisch beheizbaren Platten 35 gebildet ist, zum Beispiel durch Keramikträger, die mit Heizschichten beschichtet sind.

Daneben ist es auch möglich, die Verdampferstruktur 27, 27' so anzuordnen, daß sie von der zum Kraftstoffverdampfer 19 geführten Luft durchströmt wird. Hierdurch wird erreicht, daß die Verdampferstruktur 27, 27' optimal durchspült und der Kraftstoffdampfaustrag wesentlich verbessert wird.

Die Beheizung der Verdampferstruktur 27, die z. B. auch mit Widerstandsmaterialien mit positivem oder negativem Temperaturkoeffizienten, Drahtwendeln, Heizschichten auf Keramikträgern oder dergleichen erfolgen kann, ist so einzurichten, daß kurze Aufheizzeiten erzielt werden und sich die erforderliche Verdampfungstemperatur gut einhalten läßt. Dabei kann durch die Materialauswahl für den Verdampfer, z. B. Kunststoff oder Keramik, und die Dimensionierung der Wandstärken des Gehäuses 28 auch eine Wärmeentkopplung zu dem Einspritzventil 25 erreicht werden, um eine Dampfblasenbildung darin zu vermeiden.

## Patentansprüche

1. Kraftstoffzuführvorrichtung bei einem Verbrennungsmotor (9), mit einer eine Ansaugluftzumeßeinrichtung (16) umfassenden Luftansaugeinrichtung, die zu einzelnen Brennkammern (10) führende Saugrohre (13) aufweist, mit einer Mehrzahl von Kraftstoffeinspritzventilen (11), von denen jedes einer Brennkammer (10) zugeordnet ist, mit einem zentralen Kraftstoffverdampfer (19), mit einer Leitungsanordnung (20, 22), die den Kraftstoffverdampfer (19) ausgangsseitig mit den einzelnen Saugrohren (13) direkt ununterbrochen ohne eine Zwischenspeicherung des Kraftstoffdampfes verbindet, wobei der im Kraftstoffverdampfer (19) erzeugte Kraftstoffdampf der von den Brennkammern (10) angesaugten Luft stromabwärts von der Ansaugluftzumeßeinrichtung (16) in die Saugrohre (13) zuführbar ist, dadurch gekennzeichnet, daß
die den Kraftstoffdampf führende Leitungsanordnung (20, 22) wenigstens eine vom einzigen Kraftstoffverdampfer (19) ausgehende Leitung (20) und eine mit der Leitung (20) verbundene Verteilerleitung (22) aufweist, die sich entlang der Kraftstoffeinspritzventile (11) erstreckt und die nahe von Kraftstoffaustrittsbereichen (24) der Kraftstoffeinspritzventile (11) in das jeweilige Saugrohr (13) mündet.

2. Kraftstoff zuführvorrichtung nach Anspruch 1, dadurch gekennzeichnet, daß die Verteilerleitung (22) jeweils über eine Austrittsöffnung (23) mit einem Kraftstoffaustrittsbereich (24) jedes Kraftstoffeinspritzventiles (11) verbunden ist.

3. Kraftstoff zuführvorrichtung nach Anspruch 1 oder 2, dadurch gekennzeichnet, daß die den Kraftstoffdampf führende Leitungsanordnung (20, 22) aus Rohren oder Schläuchen aufgebaut ist, die aus einem Material mit geringer Wärmeleitfähigkeit, insbesondere aus Kunststoff bestehen.

4. Kraftstoffzuführvorrichtung nach einem der vorhergehenden Ansprüche, dadurch gekennzeichnet, daß der Kraftstoffverdampfer (19) eine elektrisch beheizbare Verdampferstruktur (27, 27') aufweist.

5. Kraftstoffzuführvorrichtung nach Anspruch 4, dadurch gekennzeichnet, daß die Verdampferstruktur (27, 27') wenigstens ein plattenförmiges Heizelement (35) mit mindestens einer Heizfläche umfaßt.

6. Kraftstoffzuführvorrichtung nach Anspruch 5, dadurch gekennzeichnet, daß eine Mehrzahl von Heizelementen (35) mit parallel zueinander angeordneten Heizflächen vorgesehen ist.

7. Kraftstoffzuführvorrichtung nach Anspruch 4, dadurch gekennzeichnet, daß die Verdampferstruktur (27) aus einem porösen, eine Vielzahl von Kanälen und/oder Kapillaren aufweisenden elektrisch beheizbaren Material, insbesondere aus einem Widerstandsmaterial mit positiven oder negativen Temperaturkoeffizienten aufgebaut ist, so daß durch die Temperaturabhängigkeit des Widerstands entweder bei einem positiven Temperaturkoeffizienten eine Selbstregelung erfolgt oder über die Widerstandsinformation eine externe Regelung möglich ist.

8. Kraftstoffzuführvorrichtung nach einem der vorhergehenden Ansprüche, dadurch gekennzeichnet, daß dem Kraftstoffverdampfer (19) eine Kraftstoffzumeßeinrichtung (25) in Form eines Einspritzventils zugeordnet ist.

9. Kraftstoffzuführvorrichtung nach einem der vorhergehenden Ansprüche, dadurch gekennzeichnet, daß der Kraftstoffverdampfer (19) an einer der Luftansaugeinrichtung zugeordneten Leerlaufluftleitungsanordnung (17) stromabwärts einer darin vorgesehenen Leerlauf-Stelleinrichtung (18) angeordnet ist.

10. Kraftstoffzuführvorrichtung nach einem der vorhergehenden Ansprüche, dadurch gekennzeichnet, daß der Kraftstoffverdampfer (19) an einer der Luftansaugeinrichtung zugeordneten Leerlaufluftleitungsanordnung (17) angeordnet ist, die nur einen Teilstrom der gesamten Leerlaufluft führt.

11. Kraftstoffzuführvorrichtung nach Anspruch 9 oder 10, dadurch gekennzeichnet, daß der Kraftstoffverdampfer (19) derart an der Leerlaufluftleitungsanordnung (17) angeordnet ist, daß sein Verdampfungsbereich von der zugeführten Luft, insbesondere unter Nutzung des Venturiprinzips, gespült ist.

## Claims

1. Fuel feed apparatus for an internal combustion engine (9), with an air intake device, which comprises an intake-air metering device (16) and has intake pipes (13) leading to individual combustion chambers (10), with a plurality of fuel injection valves (11), each of which is assigned to one combustion chamber (10), with a central fuel evaporator (19), with a conduit arrangement (20, 22) which connects the fuel evaporator (19) on the outlet side directly without interruption and without intermediate storage of the fuel vapour to the individual intake pipes (13), it being possible to feed the fuel vapour produced in the fuel evaporator (19) into the intake pipes (13) downstream of the intake-air metering device (16) to the air drawn in by the combustion chambers (10), characterized in that the conduit arrangement (20, 22) carrying the fuel vapour has at least one conduit (20) starting from the single fuel evaporator (19) and a distributor conduit (22), which is connected to the conduit (20), extends along the fuel injection valves (11) and opens into the respective intake pipe (13) close to fuel outlet zones (24) of the fuel injection valves (11).

2. Fuel feed apparatus according to Claim 1, characterized in that the distributor conduit (22) is in each case connected by an outlet opening (23) to a fuel outlet zone (24) of each fuel injection valve (11).

3. Fuel feed apparatus according to Claim 1 or 2, characterized in that the conduit arrangement (20, 22) carrying the fuel vapour is constructed from pipes or hoses composed of a material with low thermal conductivity, in particular plastic.

4. Fuel feed apparatus according to one of the preceding claims, characterized in that the fuel evaporator (19) has an electrically heatable evaporator structure (27, 27').

5. Fuel feed apparatus according to Claim 4, characterized in that the evaporator structure (27, 27') comprises at least one plate-shaped heating element (35) with at least one heating surface.

6. Fuel feed apparatus according to Claim 5, characterized in that a plurality of heating elements (35) with heating surfaces arranged in parallel with one another is provided.

7. Fuel feed apparatus according to Claim 4, characterized in that the evaporator structure (27) is constructed from an electrically heatable porous material having a multiplicity of channels and/or capillaries, in particular a high-resistivity material, with a positive or negative temperature coefficient, with the result that, through the temperature dependence of the resistance, either self-regulation occurs in the case of a positive temperature coefficient or external regulation is possible by means of the resistance information.

8. Fuel feed apparatus according to one of the preceding claims, characterized in that the fuel evaporator (19) is assigned a fuel metering device (25) in the form of an injection valve.

9. Fuel feed apparatus according to one of the preceding claims, characterized in that the fuel evaporator (19) is arranged on an idle-air conduit arrangement (17) assigned to the air intake device, downstream of an idle-adjusting device (18) provided in the said arrangement.

10. Fuel feed apparatus according to one of the preceding claims, characterized in that the fuel evaporator (19) is arranged on an idle-air conduit arrangement (17) which is assigned to the air intake device and carries only part of the flow of the total idle air.

11. Fuel feed apparatus according to Claim 9 or 10, characterized in that the fuel evaporator (19) is arranged on the idle-air conduit arrangement (17) in such a way that its evaporation zone is scavenged by the air fed in, in particular using the Venturi principle.

## Revendications

1. Dispositif d'amenée de carburant dans un moteur à combustion interne (9) comprenant :
- un dispositif d'aspiration d'air comprenant un dispositif de dosage d'air aspiré (16) et des tubes d'aspiration (13) aboutissant aux diverses chambres de combustion (10),
- plusieurs injecteurs de carburant (11), associés chacun à une chambre de combustion (10),
- un vaporiseur central de carburant (19),
- un système de conduites (20, 22) qui relie la sortie du vaporiseur (19) aux divers tubes d'aspiration (13), directement sans interruption ni stockage intermédiaire de la vapeur de carburant, cette vapeur pouvant être amenée aux tubes d'aspiration (13) par l'air aspiré par les chambres de combustion (10) en aval du dispositif de dosage d'air aspiré (16),
caractérisé en ce que
le système de conduites (20, 22) guidant la vapeur de carburant comporte au moins une conduite (20) partant de l'unique vaporiseur de carburant (19) et une conduite de répartition (22) reliée à la conduite (20), s'étendant le long des injecteurs (11) et débouchant dans chaque tube d'aspiration (13) près de la zone (24) où le carburant sort de l'injecteur (11).

2. Dispositif d'amenée de carburant selon la revendication 1,
caractérisé en ce que
la conduite de répartition (22) est reliée chaque fois par une ouverture de sortie (23) à la zone (24) où le carburant sort de l'injecteur (11).

3. Dispositif d'amenée de carburant selon la revendication 1 ou 2,
caractérisé en ce que
le système de conduites (20, 22) amenant la vapeur de carburant est constitué de tubes ou de tuyaux faits d'un matériau présentant une faible conductibilité thermique, en particulier en matière plastique.

4. Dispositif d'amenée de carburant selon l'une quelconque des revendications précédentes,
caractérisé en ce que
le vaporiseur de carburant (19) comprend une structure de vaporisation (27, 27') chauffable électriquement.

5. Dispositif d'amenée de carburant selon la revendication 5,
caractérisé en ce que
la structure de vaporisation (27, 27') comprend au moins un élément chauffant (35) en forme de plaque ayant au moins une surface chauffante.

6. Dispositif d'amenée de carburant selon la revendication 5,
caractérisé en ce qu'
il est prévu un certain nombre d'éléments chauffants (35), ayant leurs surfaces chauffantes disposées parallèlement.

7. Dispositif d'amenée de carburant selon la revendication 4,
caractérisé en ce que
la structure de vaporisation (27) est faite d'un matériau poreux, chauffable électriquement et présentant un grand nombre de canaux et/ou de capillaires, en particulier un matériau résistant électriquement et à coefficient de température positif ou négatif, de sorte que la dépendance de la résistance vis-à-vis de la température fait que l'on obtient, dans le cas d'un coefficient de température positif, une autorégulation, ou que l'on peut, à partir d'une information sur la résistance, effectuer une régulation externe.

8. Dispositif d'amenée de carburant selon l'une quelconque des revendications précédentes,
caractérisé en ce qu'
au vaporiseur de carburant (19) est associé un dispositif de dosage de carburant (25) sous la forme d'un injecteur.

9. Dispositif d'amenée de carburant selon l'une quelconque des revendications précédentes,
caractérisé en ce que
le vaporiseur de carburant (19) est monté sur un système de conduite d'air de ralenti (17) associé au dispositif d'aspiration d'air, en aval d'un dispositif de réglage de ralenti (18) prévu dans le système.

10. Dispositif d'amenée de carburant selon l'une quelconque des revendications précédentes,
caractérisé en ce que
le vaporiseur de carburant (19) est monté sur un système de conduite d'air de ralenti (17) associé au dispositif d'aspiration d'air et qui assure le débit d'une partie seulement de l'air global de ralenti.

11. Dispositif d'amenée de carburant selon l'une quelconque des revendications 9 ou 10,
caractérisé en ce que
le vaporiseur de carburant (19) est monté sur le système de conduite d'air de ralenti (17) de manière que sa zone de vaporisation est balayée par l'air amené, en particulier par utilisation du principe de venturi.
